# EUROPEAN PATENT SPECIFICATION

(11) **EP 0 699 330 B1**
(45) Date of publication and mention of the grant of the patent: **29.04.1998**
(21) Application number: 94915614.5
(22) Date of filing: 18.05.1994
(51) Int. Cl.: G09B 29/10

(54) **GPS EXPLORER**
GPS-FORSCHER
INSTRUMENT DE RECHERCHES GPS

(30) Priority: 18.05.1993 GB 9310175
(43) Date of publication of application: 06.03.1996
(73) Proprietor: TAYLOR, William Michael Frederick, Newenden, Kent TN 18 5QQ (GB)
(72) Inventor: TAYLOR, William Michael Frederick, Newenden, Kent TN 18 5QQ (GB)
(74) Representative: Hutchins, Michael Richard
(86) International application number: GB9401067
(87) International publication number: WO9427268

(56) References cited:
- EP-A- 0 441 489
- WO-A-92/02891
- WO-A-92/04683
- WO-A-93/20546
- DE-A- 4 126 495
- DE-A- 4 219 171
- US-A- 5 067 081
- US-A- 5 170 164

## Description

The invention is a portable information system which uses Global Positioning System (GPS) data as a key to retrieve audio visual information from a database or broadcast.

Almost everyone who travels needs information about the place they are visiting. However, we all have different needs and interests; some need commercial information, others may wish to buy a product, some people like to know the history of a place, or to discover hidden corners, and others are simply bored and long for their journey to be made more interesting.

As databases grow in size so the problem of finding relevant data when it is needed becomes more difficult to solve. Few people have the time, motivation or patience to search through telephone books, yellow pages, guide books, information systems and the like. Having taken along trip it is often only on returning home when one learns too late what has been missed. Even when at home it can be difficult to find out what is happening in the area today which might be of interest.

When walking, driving, sailing or flying our need for information remains, although our ability to search for it may be severely limited by the task in hand. We frequently need to switch modes of travel between car/ aircraft/boat/bus/horseback or foot.

Most portable GPS receivers on the market today are designed for navigation, giving the user's position in terms of latitude and longitude or bearing and distance from a known point. Both methods are cumbersome to use. Although GPS moving map displays show positions more clearly, their applications remain rather limited, due to the need for a screen and the risk of distraction when walking or driving. Both types of GPS system offer the user little other information.

One known type of navigation system using GPS is disclosed in WO-A-92/04683.

Talking books using CD-ROM disks may provide the information lacking in the above mentioned navigation systems. However, as the location of the user is not monitored automatically, any information must be extracted manually by the user, which can be laborious.

Portable computers and pen computing systems provide essentially text based information on the move. However, neither offer user friendly, hands-free, eyes-free operation with automatic, dynamically retrieved audio (and video) data based on the user's position, altitude, attitude, speed, time, direction of view, stated needs and interests. It is not easy to use such a portable PC when walking or riding on horseback.

The present invention sets out to overcome the aforementioned problems by providing an information system, which is preferably portable, using Global Positioning System (GPS) data as a key to retrieve audio and video from a database or from broadcast data. The user may preselect the type of data of interest to him, then as his position, direction, speed, altitude or attitude change and the time of day changes, this is detected by the GPS receiver and the system automatically retrieves the appropriate data from the database. The device incorporates an internal exchangeable database on compact disk and can also access external databases and broadcast data.

Accordingly, in afirst aspect, the invention provides an information system incorporating:
a database;
means for determining position data relating to a user, using a GPS receiver or other satellite positioning system receiver;
means for automatically retrieving audio and/or visual information from a database using a data retrieval key, derived from the user's position, including any combination of the following:
   location
   orientation
   direction of travel
   direction of view
   speed
   altitude
   date
   time;
means for the user to select or pre-select data of interest to him/her;
means for outputting retrieved data.

Particular and preferred aspects of the invention are as set forth in the dependent claims appended hereto.

In another aspect, the invention provides a portable entertainment system incorporating an information system as hereinbefore defined.

The present invention is designed to provide information on the move. In most of the applications envisaged the user has little need to know his location, simply wishing to be told about places of interest to him such as the history of a nearby building or where to buy a product. The fact that the information the user requires comes from a device which uses GPS position, speed, altitude or time as a key to access a database need not concern the user or be apparent.

To enable the user to operate the systems hands-free and eyes-free while driving, flying, sailing, riding or walking, it may be controlled using audible menus and voice command. Telephone calls may also be made automatically via an integrated cellphone or satellite phone using numbers retrieved from the database.

On a journey the system can for example be set to automatically identify places of likely interest to the user, to describe the history of nearby buildings or the prettiest route to take. The user can also initiate an automatic search of the database for specific things of interest to him, such as landmarks, hotels, hospitals, shops or products, usually, though not necessarily, within a radius of his present position.

The basic device is a portable audio information system which uses GPS data as a key or keys to retrieve digital audio from a database contained within the device or attached to it by any means or received by any means including telephone, radio or television broadcast.

When equipped with or attached to a screen, the device may also include the facility to retrieve still and motion video sequences from a database contained within or attached to the device by any means or received by any means including telephone, radio or television broadcast. When connected to a display, the system may also be used to preview trips.

The system can provide GPS positioned simulations using virtual reality displays. The GPS derived position, elevation, viewing direction and time of day, enables simulated structures, buildings, dams, roads and landscape features to be dropped into the user's field of view and to be examined from all angles around the proposed site while it is still virgin territory.

The device constantly monitors its position, speed, direction of movement, the time and any like data by reference to a GPS receiver either incorporated within the device or connected to it by any means. Whenever the device detects a change in any GPS parameters, such as a change in location or time, it will use the new GPS data as a key or keys to search the database including received broadcast data and retrieve any data records which directly or indirectly match or relate to the new GPS parameters. Before being output as audio or displayed, the retrieved data will be checked against the mode of operation of the device and against other selection criteria, to determine which, if any, of the retrieved data items are to be presented to the user. A rolling log of messages will be kept to avoid needless repetition.

The device may be controlled by voice command or by keyboard, switch or joystick, directly or remotely. The user may select the mode of operation of the device, data retrieval criteria and other operating criteria.

The device has an audible menu system which when used with voice command, enables the device to be used hands-free and eyes-free. Feedback protection avoids the audio output triggering the voice input system.

The device may be fitted with a telephone interface enabling telephone calls to be placed to numbers retrieved from the database or broadcast data. The device may also be fitted with an interface for the attachment of optical, magnetic, radio or other devices capable of inputting data for the purpose of identifying location, products, persons, vehicles, systems, temperatures or any environmental variables.

The device determines user orientation, direction of movement, speed, pitch and role, altitude, rate of climb or descent, and the user's direction of view in terms of bearing, angle of azimuth and range. The system can also accept optical or other inputs to identify locations within buildings, which would otherwise be out of GPS reception.

### DESCRIPTION OF PREFERRED EMBODIMENTS

1. An audio only version of the design will now be described by reference to the accompanying drawings.

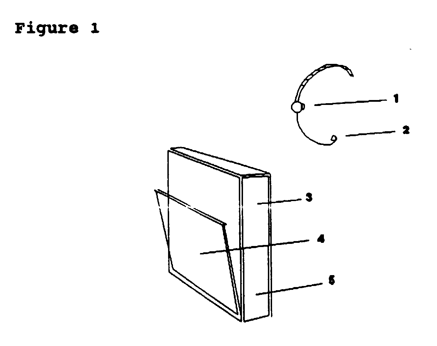

Figure 1 shows the audio only version of the device comprising: audio earpiece 1, microphone 2, the GPS receiver 3, the CD drive 4 and the processor 5.

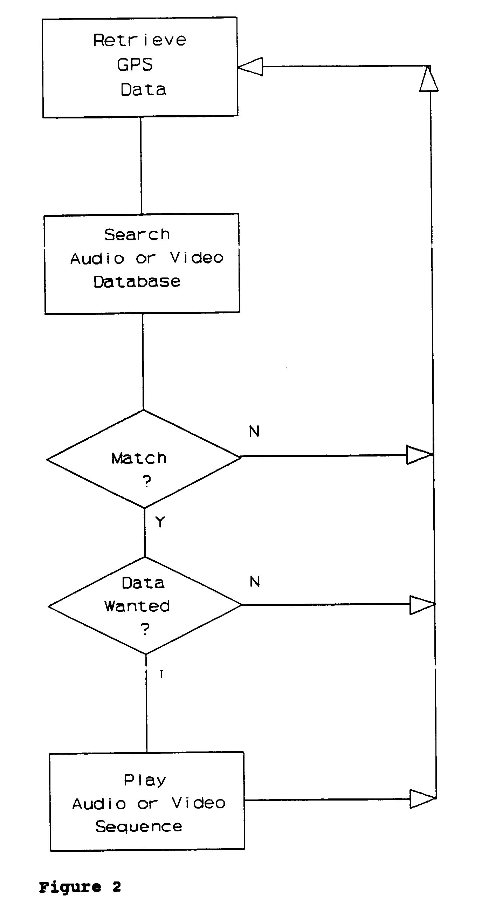

Figure 2 shows the basic logic used to monitor the user's position and to retrieve and play the appropriate audio.

Figure 3 shows a map on which large dots represent the positions determined by GPS at which specific audio phrases will be selected from the database or radio broadcast and played. Samples of typical audio phrases are numbered 1-6.

The GPS latitude/longitude co-ordinates of places of interest such as historic buildings, castles, villages, parks, lakes, mountains, panoramic viewpoints and so forth may be digitized from maps or by on site survey. Audio describing each place of interest will then be recorded and stored, in compressed form, with corresponding GPS co-ordinates, in a database on a compact disc (GPS-CD).

The portable device may then be used with such a GPS-CD database to provide information to the user who may select one or more of the device's many modes of operation, such as for example:

### En Route Mode

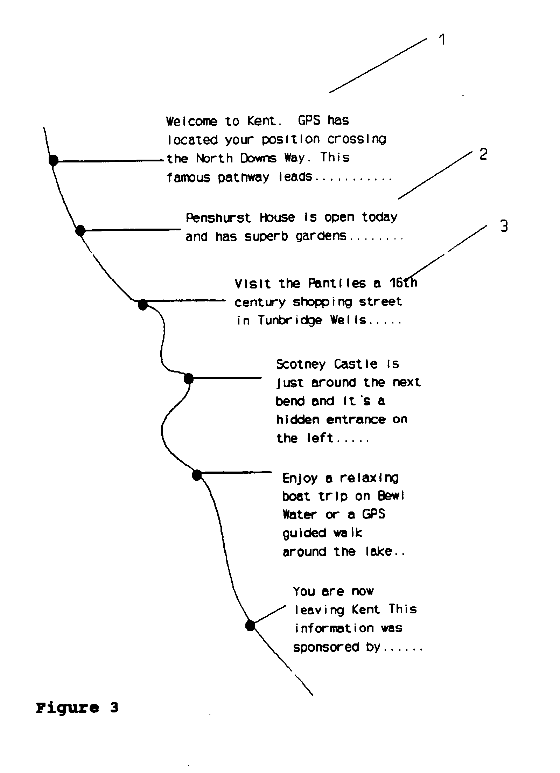

Figure 3 shows a typical journey by car along a major road. By constantly monitoring GPS data, the device will determine when each of the locations 1-6 has been reached, and the corresponding audio phrase will then be retrieved from the GPS-CD database or broadcast data and played to the user through an earpiece or loudspeaker.

There may be several locations at which broadly similar messages would be applicable, such as approaching a village from the North, South, East or West. In this case, the appropriate audio messages may be assembled from several phrases with variables such as left and right inserted as determined by user orientation, thus enabling more economic use to be made of available database space.

### Tour Mode

The user may select a tour either from the main menu or when offered the option en route. The system will then provide tour guidance and point out things of interest. For example when walking or driving past historic buildings or other features information about each building will be given, such as its date of construction, who lived there, how it was built, or if it is open to the public. The dialogue may include historic sounds, the crack of a coachman's whip, the voices of children at play, music drifting on the air, all creating the atmosphere of a bygone age.

### Hazard Warning Mode

If this mode has been selected it will take priority over other modes in use at the time such as tour mode. When approaching a hazard, the system will interrupt any other audio message to alert the user. Examples of such hazards could be, in road use, a dangerous bend, a school or a steep hill and in flying mode, a warning of controlled airspace.

### Guidance Mode

The GPS latitude/longitude location of a road junction will be digitized and audio recorded for each direction of approach to each junction. The device will identify the user's position and direction of travel on the approach to a junction by reference to GPS data and will then retrieve the appropriate audio in advance of the junction to act as an audio signpost. The audio signpost will not be restricted to just place names as it may include much more information about road type, places of interest en route, warnings such as no fuel for 50 miles and so on.

### Destination Oriented Guidance Mode

When this mode is first selected the user will be prompted to choose a destination. A route from the present position to the destination will be determined from routing data. The device will then provide only the single direction needed at each junction to reach the destination without referring to unwanted directions.

### What's On Mode

The device will examine the co-ordi nates of all the specially identified places of interest in the immediate area, gradually working out from the present GPS location. The device will then play a short audio phrase for each activity to briefly arouse the interest of the user. The user may then select any activity and obtain further details for deliberation, after which GPS guidance will be provided to the venue on request. An auto dial telephone number may be added for use via the telephone interface, to enable reservations to be made for hotels, theatres or similar venues without the need to write down then dial the number.

### Walking Mode v Drive Mode v Flying Mode, etc.

The system will adjust the presentation of messages to suit the mode of travel selected by the user and the GPS calculated speed. For example, when walking slowly around a town the user will be given more details than when driving through the town or flying overhead.

### Application Specific Modes

Certain applications may require a special mode of operation to focus the user's attention on certain data, for example:

### Walking tours in open country

A map provides only limited information, whereas by using a walks database GPS Explorer can provide orientation, directional guidance and can identify landmarks by name. It can also keep the casual walker entertained with a poem or music or a description of the view at the appropriate point on the walk. A group may share the audio with personal radio earpieces without the need for wire connection or noise pollution from a loudspeaker.

The system will orientate the user by compass bearing or turn left/right command enabling the user to be directed to a pathway or to safety. By pointing the device at a hill for example the system will retrieve the name of the hill, its height and any hazards such as cliffs.

With a database of walks, giving distances and times, the system will calculate from the present GPS position and time if the number of hours of daytime left are sufficient for the selected walk to be completed safely.

In an emergency, a distress call can be made via cellular or satellite phone, incorporating GPS position data into the audio message to aid rescue services.

### General Aviation Application

Having selected general aviation mode for example, the system will identify the user's GPS position, altitude and speed in relation to aviation related points such as airports, restricted areas, danger areas, light aircraft routes, air traffic control boundaries and so forth. The device will then provide the pilot with audio guidance, airspace alerting or an information retrieval by voice command, accepting pilot response by voice command or in noisy cockpits by press button.

### Call Ahead

To find a telephone number when on the move can be difficult. This system provides several facilities which will help. In any mode the user has access to an audible facilities menu, providing a list of hotels, airlines and so on. When a selection has been made by the user, the system will automatically dial the telephone call using the telephone number held in the database.

The system uses GPS position, direction of travel and the user's pre-determined preferences to order the possible alternatives into a logical sequence for presentation to the user. For example, if the user is heading South at high speed by road, prefers a 4 star hotel and payment by AMEX, the alternatives will be reduced. They will then be ranked in distance from present position. The system will then retrieve the correct telephone number ready for the user to request auto-dial telephone call for room reservation.

The system will also hold the user's preferred credit card details on file avoiding any need to retrieve the card from a pocket while driving or flying. On the telephone, the user needs only say "my AMEX number is" and the system will retrieve the card number data and finish the sentence for the user,. e.g "1234 3456 567 expiry date 0695".

En route advertising could also be inserted into tours at specified points to provide the user with the facility to call ahead to reserve a table for dinner, order flowers, to book a hotel room or reserve a ferry space.

### Audio Commands

The device may be controlled by audio commands, chosen by the user, to perform a range of basic information storage and retrieval functions. The user will need to select commands which he/she is comfortable with. Examples of these are given below:

| | |
|---|---|
| Menu - | plays the main menu |
| OK - | selects the last option stated |
| Repeat - | replays the last audio phrase |
| X Mode - | selects a specific mode |
| Stop - | stops the audio |
| Start - | starts the audio |
| Earpiece - | switches to earpiece |
| Speaker - | switches to loudspeaker |
| Skip - | skips the present audio phrase |
| Position - | gives position from ... |
| Distance - | gives distance from start, to ... |
| Log on - | starts a log of position data |
| Log off - | stops log |

### 2. An audio visual version of the design will now be described by reference to the following drawing:

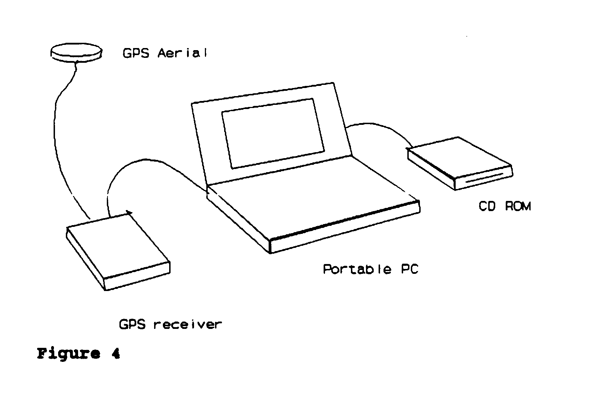

Figure 4 shows a version of the audio/visual system based on a standard portable PC. Still and/or motion video sequences will be stored on GPS-CD along with the GPS co-ordinates described in the audio example above. This visual data can then be accessed in several modes:

### Pre-view Mode

Before visiting a remote location, the user may use the device to pre-view the various places he intends to visit. Any visual sequences may be retrieved and played simply by entering the name or latitude/longitude of the desired place or by selecting it from a list given by the system.

### More Detail Mode

In an audio mode, once audio details of a venue have been given by the system, the user will be notified by a bleep or prompt if pictorial information is also available from the database. The user may then select it if required.

### Simulation Mode

Having arrived at a physical location or identified it in pre-view mode, the user may access the database to obtain a computer based simulation of some aspect of the location, for example to see the route of a proposed new road or the simulated facade of a proposed new building. By walking around the physical site, as the GPS data changes so will the simulation to illustrate the simulated views from the new physical position taking into consideration the user's orientation, height, direction of view, view angle or azimuth and time of day. The simulation may be presented on a display screen or any form of image projection system such as a virtual reality helmet or other device. If used in conjunction with a head up display the user will have both the present image and simulated future in view simultaneously, enabling comparison.

### 3. A real time version of the device will now be described.

To enable the user to have access to up to the minute information, the device incorporates a radio or television receiver to receive specially broadcast regional data transmissions. The system selects incoming data relevant to the chosen mode of use and location based on GPS calculated position. Selected data items are stored in memory in the device on receipt and then handled in the same way as other database data described earlier.

The real time data system could provide the user with access to and automatically search a wide range of information sources such as: local weather, weather reports for pilots and yachtsmen, scheduled flight delays, details of special events, hotel room availability, road conditions, audio guided diversions, and financial market updates, for example.

### 4. A virtual reality version of the device will now be described.

Virtual reality is a term used to describe a computer generated three-dimensional image which when observed using a special form of projection system or helmet, creates the illusion of reality and allows the user to move through it and to react with computer generated objects.

This invention combines the real world image with computer generated images. The device obtains its real world frame of reference from its GPS position. This allows the device to generate virtual objects so they are correctly located within the observer's real world. The resulting computer generated image may then be projected into the user's field of view using split image spectacles. Alternatively the computer generated objects may be overlaid on a video picture of the real world and the resulting composite image projected for an observer wearing an artificial reality helmet.

The device enables a fire or rescue crew visiting say an oil rig to superimpose structural, electrical or hazard data onto their real world view of the structure, giving them safety related information and audible hazard alerts.

The device would also enable a user visiting the site for a new building to see the computer generated image of the new building superimposed in the landscape. The computer generated image will change as the user's GPS position changes when he walks around the site.

### COMMERCIAL EXPLOITATION OF THE INVENTION

Revenue can be generated from sales of the GPS Explorer units, application CD's and real time services.

Sales of GPS Explore CD's are expected to provide the greatest growth potential as the range of potential applications for the system is almost unlimited. Each new application will require companies around the world to produce new CD's for their market. Many Explorer CD's will incorporate details of the businesses in an area, rather like an interactive version of Yellow Pages. But unlike Yellow Pages who leave customers with the problem of finding the advertisers' premises, the GPS Explorer system leads the customer to the advertisers, even if their premises are difficult to find, it will even dial the number automatically to enable the user to check requirements before going there.

## Claims

1. An information system incorporating:
a database;
means for determining position data relating to a user, using a GPS receiver or other satellite positioning system receiver;
means for automatically retrieving audio and/or visual information from a database using a data retrieval key, derived from the user's position, including any combination of the following:
location
orientation
direction of travel
direction of view
speed
altitude
date
time;
means for the user to select or pre-select data of interest to him/her;
means for outputting retrieved data.

2. An information system according to claim 1 wherein the database contains audio information, and means are provided for automatically retrieving the audio information from the database using the data retrieval key.

3. An information system according to Claim 1 incorporating means for retrieving radio, television, cellular telephone, satellite telephone or any other form of broadcast or broadcast data and adding this to the database.

4. An information system according to Claim 1 incorporating means for the user to select different modes of data retrieval or presentation to meet ergonomic constraints of different modes of travel.

5. An information system according to Claim 1 wherein the means for determining the user's physical orientation is also arranged to include any one of: heading, direction of movement, speed, acceleration or deceleration, rate of climb or descent, pitch angle or rate, roll angle or rate, or any like parameters.

6. An information system according to Claim 1 incorporating optical, magnetic, radio or other means of inputting data for the purpose of identifying location, products, persons, vehicles, systems, temperatures or any environmental variables.

7. An information system according to Claim 1 having means for determining direction of view which means is also arranged to include compass bearing, azimuth or range.

8. An information system according to Claim 1 incorporating a telephone or telephone interface with means to enable a telephone call to be made using telephone numbers from any database or broadcast, without the user needing to dial the number.

9. An information system according to Claim 1 incorporating means for the user to control the device by selecting from audible options, contained within audio data or audio menus.

10. An information system according to Claim 1 which is provided with a display screen.

11. An information system according to Claim 1 which is controlled by spoken audio command.

12. An information system according to Claim 1 which is controlled by keyboard or by any form of joystick or switch.

13. An information system according to Claim 1 with more than one channel for simultaneous use by a group of users.

14. An information system according to Claim 1 incorporating means to present the user with an audio and/or visual simulation or partial simulation, of an alternative audio and/or visual three dimensional environment based on the user's location in space and time, orientation and direction of view in the real world.

15. An information system according to any one of the preceding claims which is portable.

16. An entertainment system incorporating an information system according to any one of the preceding claims.

17. An information system incorporating:
a database;
means for determining position data relating to a user, using a GPS receiver;
means for automatically retrieving audio and/or visual information from a database using a data retrieval key, derived from the user's position, including any combination of the following:
location
orientation
direction of travel
direction of view
speed
altitude
date
time;
means for the user to select or pre-select data of interest to him/her;
means for outputting retrieved data.

18. An information system according to claim 1 wherein the means for determining position data relating to a user comprises a GPS receiver, changes in GPS parameters detected by the GPS receiver being used as a key or keys to search the database to retrieve data records matching or relating to the GPS parameters, the retrieved data being compared with data selection or pre-selection criteria to determine which, if any, of the retrieved data items are to be presented to a user of the system.

## Patentansprüche

1. Informationssystem mit:
einer Datenbank;
Einrichtungen zur Bestimmung von auf einen Benutzer bezogenen Positionsdaten unter Verwendung eines GPS-Empfängers oder eines Empfängers eines anderen satellitengestützten Positionsbestimmungssystems;
Einrichtungen zum automatischen Abruf von akustischer und/oder optischer Information aus einer Datenbank unter Verwendung eines Datenabrufschlüssels, der von der Position des Benutzers abgeleitet ist, und der irgendeine Kombination der folgenden Parameter einschließt:
Position
Ausrichtung
Bewegungsrichtung
Blickrichtung
Geschwindigkeit
Höhe
Datum
Zeit;
Einrichtungen für den Benutzer zur Auswahl oder Vorauswahl von Daten, die für ihn/sie von Interesse sind;
Einrichtungen zur Ausgabe von abgerufenen Daten.

2. Informationssystem nach Anspruch 1, bei dem die Datenbank akustische Informationen enthält und Einrichtungen zum automatischen Abrufen der akustischen Information von der Datenbank unter Verwendung des Datenabrufschlüssels vorgesehen sind.

3. Informationssystem nach Anspruch 1, das Einrichtungen zum Abrufen von Rundfunk, Fernsehen, Mobiltelefon, Satellitentelefon oder irgendeiner Form von Rundfunk oder Rundfunkdaten und zu deren Hinzufügung zu der Datenbank umfaßt.

4. Informationssystem nach Anspruch 1, das Einrichtungen für den Benutzer zur Auswahl unterschiedlicher Betriebsarten des Datenabrufs oder der Datendarbietung umfaßt, um ergonomische Beschränkungen unterschiedlicher Fortbewegungsarten zu erfüllen.

5. Informationssystem nach Anspruch 1, bei dem die Einrichtung zur Bestimmung der körperlichen Richtung des Benutzers weiterhin so ausgebildet ist, daß sie einen der folgenden Parameter einschließt: Kurs, Bewegungsrichtung, Geschwindigkeit, Beschleunigung oder Abbremsung, Steig- oder Sinkgeschwindigkeit, Nickwinkel oder Nickgeschwindigkeit, Rollwinkel oder Rollgeschwindigkeit oder irgendwelche anderen ähnlichen Parameter.

6. Informationssystem nach Anspruch 1, das optische, magnetische, Funk- und andere Einrichtungen zur Eingabe von Daten zum Zweck der Identifikation der Position, von Produkten, von Personen, von Fahrzeugen, von Systemen, von Temperaturen oder irgendwelcher anderer Umgebungsvariablen umfaßt.

7. Informationssystem nach Anspruch 1 mit Einrichtungen zur Bestimmung der Blickrichtung, wobei diese Einrichtung weiterhin so ausgebildet ist, daß sie den Kompaßkurs, den Azimut oder die Entfernung einschließt.

8. Informationssystem nach Anspruch 1, das ein Telefon oder eine Telefonschnittstelle mit Einrichtungen einschließt, die es ermöglichen, daß ein Telefongespräch unter Verwendung von Telefonnummern von irgendeiner Datenbank oder einer Rundfunksendung durchgeführt wird, ohne daß der Benutzer die Nummer wählen muß.

9. Informationssystem nach Anspruch 1, das Einrichtungen für den Benutzer zur Steuerung des Gerätes durch eine Auswahl aus hörbaren Optionen umfaßt, die innerhalb von akustischen Daten oder Tonsignalmenüs enthalten sind.

10. Informationssystem nach Anspruch 1, das mit einem Anzeigebildschirm versehen ist.

11. Informationssystem nach Anspruch 1, das durch gesprochene Tonbefehle gesteuert ist.

12. Informationssystem nach Anspruch 1, das durch eine Tastatur oder durch irgendeine Form eines Steuerknüppels oder Schalters gesteuert ist.

13. Informationssystem nach Anspruch 1 mit mehr als einem Kanal zur gleichzeitigen Verwendung durch eine Gruppe von Benutzern.

14. Informationssystem nach Anspruch 1, das Einrichtungen umfaßt, die dem Benutzer eine akustische und/oder optische Simulation oder teilweise Simulation einer alternativen akustischen und/oder optischen dreidimensionalen Umgebung auf der Grundlage der Position des Benutzers in Raum und Zeit, der Ausrichtung und Blickrichtung in der tatsächlichen Welt bieten.

15. Informationssystem nach einem der vorhergehenden Ansprüche, das tragbar ist.

16. Unterhaltungssystem, das ein Informationssystem gemäß einem der vorhergehenden Ansprüche umfaßt.

17. Informationssystem mit:
einer Datenbank;
Einrichtungen zur Bestimmung von auf einen Benutzer bezogenen Positionsdaten unter Verwendung eines GPS-Empfängers;
Einrichtungen zum automatischen Abrufen von akustischer und/oder optischer Information von einer Datenbank unter Verwendung eines Datenabrufschlüssels, der von der Position des Bennutzers unter Einschluß irgendeiner Kombination der folgenden Parameter abgeleitet ist:
Position
Ausrichtung
Bewegungsrichtung
Blickrichtung
Geschwindigkeit
Höhe
Datum
Zeit;
Einrichtungen für den Benutzer zur Auswahl oder Vorauswahl von ihn/sie interessierenden Daten;
Einrichtungen zur Ausgabe abgerufener Daten.

18. Informationssystem nach Anspruch 1, bei dem die Einrichtung zur Bestimmung von auf einen Benutzer bezogenen Positionsdaten einen GPS-Empfänger umfaßt, wobei Änderungen der von dem GPS-Empfänger festgestellten GPS-Parameter als ein oder mehrere Schlüssel zum Durchsuchen der Datenbank verwendet werden, um Datensätze abzurufen, die mit dem GPS-Parametern übereinstimmen oder sich auf diese beziehen, wobei die abgerufenen Daten mit Datenauswahl- oder Datenvorauswahl-Kritierien verglichen werden, um festzustellen, ob und welche der abgerufenen Datenposten dem Benutzer des Systems darzubieten sind.

## Revendications

1. Système d'information comprenant:
une base de données;
un moyen pour déterminer des données de position relatives à un utilisateur utilisant un système récepteur GPS ou autre système récepteur de positionnement par satellite;
un moyen pour automatiquement retrouver des informations audio et/ou visuelles d'une base de données utilisant une clef de recherche de données dérivée de la position de l'utilisateur, comprenant toute combinaison possible de ce qui suit:
endroit,
orientation,
direction de voyage
direction de vue
vitesse,
altitude,
date,
temps;
un moyen pour l'utilisateur pour sélectionner ou présélectionner des données qui l'intéressent;
un moyen pour sortir les données trouvées.

2. Système d'information selon la revendication 1, dans lequel la base de données contient des informations audio, et des moyens sont prévus pour automatiquement retrouver l'information audio de la base de données en utilisant la clef de recherche de données.

3. Système d'information selon la revendication 1, comprenant un moyen pour retrouver des transmissions radio, de télévision, de téléphone cellulaire, de téléphone par satellite et toute autre forme de radiodiffusion ou radiodiffusion de données et ajouter ceci à la base de données.

4. Système d'information selon la revendication 1, comprenant un moyen pour l'utilisateur pour choisir différents modes de recherche ou de présentation de données pour suffir à des contraintes ergonomiques des modes de voyage différents.

5. Système d'information selon la revendication 1, dans lequel le moyen pour déterminer l'orientation physique de l'utilisateur est aussi arrangé pour comprendre l'un quelconque de: cap, direction de déplacement, vitesse, accélération ou décélération, vitesse de montée ou de descente, angle ou vitesse de tangage, angle ou vitesse de roulis, ou n'importe quels paramètres similaires.

6. Système d'information selon la revendication 1, comprenant des moyens d'introduction de données optiques, magnétiques, radio ou autres à des fins d'identification d'endroit, produits, personnes, véhicules, systèmes, températures ou n'importe quelles variables environnantes.

7. Système d'information selon la revendication 1, ayant un moyen pour déterminer la direction de vue, ledit moyen est également arrangé pour inclure relèvement au compas, azimut ou distance.

8. Système d'information selon la revendication 1, comprenant un téléphone ou un interface téléphonique comprenant des moyens pour réaliser un appel téléphonique à faire, utilisant des nombres téléphoniques de toute base de données ou radiodiffusion, sans que l'utilisateur ait besoin de faire le numéro.

9. Système d'information selon la revendication 1, comprenant un moyen pour l'utilisateur pour commander le dispositif en choisissant des options acoustiques contenues dans les données ou menus audio.

10. Système d'information selon la revendication 1 pourvu d'un écran d'affichage.

11. Système d'information selon la revendication 1, qui est contrôlé par des commandes audio parlées.

12. Système d'information selon la revendication 1, qui est contrôlé par un clavier ou n'importe quelle forme de commutateur à tige ou commutateur.

13. Système d'information selon la revendication 1, comprenant plus d'un canal pour usage simultané par un groupe d'utilisateurs.

14. Système d'information selon la revendication 1, comprenant un moyen pour présenter à l'utilisateur une simulation audio et/ou visuelle ou partielle d'un environnement alternatif audio et/ou visuel à trois dimensions, basé sur la position de l'utilisateur dans l'espace et le temps, l'orientation et la direction de vue dans le monde réel.

15. Système d'information selon une quelconque des revendications précédentes qui est portable.

16. Système spectacle comprenant un système d'information selon une quelconque des revendications précédentes.

17. Système d'information comprenant:
une base de données;
un moyen pour déterminer des données de position relatives à l'utilisateur utilisant un récepteur GPS;
un moyen pour automatiquement retrouver l'information audio et/ou visuelle d'une base de données utilisant une clef de recherche de données dérivée de la position de l'utilisateur, comprenant une combinaison quelconque de ce qui suit:
endroit,
orientation,
direction de voyage,
direction de vue,
vitesse,
altitude,
date,
temps;
un moyen pour l'utilisateur pour sélectionner ou présélectionner des données qui l'intéressent;
un moyen pour sortir les données trouvées.

18. Un système selon la revendication 1, dans lequel le moyen pour déterminer les données de position relatif à l'utilisateur comprend un récepteur GPS, des changements dans les paramètres GPS déterminés par le récepteur GPS étant utilisés comme clef ou clefs pour rechercher la base de données pour trouver des enregistrements de données adaptées ou concernant les paramètres GPS, les données retrouvées étant comparées avec les critères sélectionnés ou présélectionnés de données pour déterminer lequel, s'il y en a, des éléments de données trouvés doit être présenté à un utilisateur du système.
